# EUROPEAN PATENT SPECIFICATION

(11) **EP 4 539 220 B1**
(45) Date of publication and mention of the grant of the patent: **28.10.2026**
(21) Application number: 23840033.7
(22) Date of filing: 12.07.2023
(51) Int. Cl.: H01M 50/191, H01M 50/105, H01M 50/119, H01M 50/129, H01M 50/126, H01M 50/178, B29C 53/36

(54) **POUCH TYPE BATTERY CELL, AND METHOD FOR MANUFACTURING THE SAME**
BEUTELARTIGE BATTERIEZELLE UND VERFAHREN ZU DEREN HERSTELLUNG
ÉLÉMENT DE BATTERIE DE TYPE POCHE ET SON PROCÉDÉ DE FABRICATION

(30) Priority: 15.07.2022 KR 20220087829
(43) Date of publication of application: 16.04.2025
(73) Proprietor: LG Energy Solution, Ltd., Seoul 07335 (KR)
(72) Inventor: LEE, Chang Je, Daejeon 34122 (KR); LEE, In Seok, Daejeon 34122 (KR); MYOUNG, Gi Hoon, Daejeon 34122 (KR)
(74) Representative: Plasseraud IP
(86) International application number: PCT/KR2023/095027
(87) International publication number: WO 2024/014942

(56) References cited:
- JP-A- 2000 223 090
- JP-A- 2004 095 217
- KR-A- 20140 133 569
- KR-A- 20150 110 983
- KR-A- 20150 110 983
- KR-A- 20200 114 385
- KR-A- 20200 114 385

## Description

### TECHNICAL FIELD

### CROSS-REFERENCE TO RELATED APPLICATION

This application claims the priority of Korean Patent Application No. 10-2022-0087829 filed on July 15, 2022.

### TECHNICAL FIELD

The present invention relates to a pouch type battery cell, in which an electrode assembly is accommodated between a pair of cases, each of which includes a first resin layer constituting the innermost layer, a second resin layer constituting the outermost layer, and a metal layer stacked between the first resin layer and the second resin layer, and a method for manufacturing the pouch type battery cell.

### BACKGROUND ART

Recently, secondary batteries receive attention as power sources for electric vehicles (EV), hybrid electric vehicles (HEV), and the like, which are proposed as solutions to solve problems such as air pollution caused by existing gasoline vehicles, diesel vehicles, and the like, using fossil fuel.

While a small-sized mobile device uses one or a few secondary batteries, a medium to large-sized device such as electric vehicle, uses a battery module, in which a plurality of secondary batteries are electrically connected to each other, or a battery pack, in which a plurality of battery modules are electrically connected to each other, due to the need for high output and large capacity.

It can be said that one of the secondary batteries that attract the most interest among currently commercialized secondary batteries is a lithium secondary battery. According to the shape of an exterior material, the lithium secondary battery may be classified into a can type, a prismatic type, a pouch type, and the like. Among these batteries, pouch type secondary batteries are widely used in medium to large-sized battery modules due to advantages of having a high energy density and of being easily stacked. KR 2015 0110983 A discloses a pouch for secondary battery.

Recently, as a demand for a secondary battery module mounted in a vehicle increases, the customers' request for stability gradually increases. The customers request that an energy density of the battery cells be increased in a restricted space of the secondary battery module. In this case, there is a problem that a stability risk related to battery cell fires and explosions increases together.

In general, a pouch type battery cell has a structure in which an electrode assembly is accommodated in a pouch type battery case and a sealing portion is provided on an edge of the battery case.

When a temperature of the battery exceeds a critical temperature due to abnormal heat generation or the like, the temperature rapidly may increase and thermal propagation (TP) to other surrounding battery cells may occur. Accordingly, a safety problem may occur. Thus, a sealing portion having higher thermal resistance and sealing strength needs to be achieved to prevent or sufficiently delay the thermal propagation.

### DISCLOSURE OF THE INVENTION

### TECHNICAL PROBLEM

The present invention strives to provide a pouch type battery cell, in which a sealing portion has high thermal resistance and sealing strength, and a method for manufacturing the pouch type battery cell.

### TECHNICAL SOLUTION

A pouch type battery cell according to the present invention is presented in claim 1.

The metal sealing portion may be disposed outside the insulating sealing portion.

The metal sealing portion may include a first metal sealing portion, at which one surface of the metal layer of the other case is sealed to the metal layer of the one case, and a second metal sealing portion at which the other surface of the metal layer of the other case is sealed to the metal layer of the one case.

The first resin layer and the second resin layer may be excluded from the metal sealing portion.

The first resin layer may be excluded from the metal sealing portion, and the second resin layer may be excluded from any one of both outer surfaces of the folded portion.

The metal layer may include a stainless-steel material.

A method for manufacturing a pouch type battery cell according to the present invention is presented in claim 7.

In the sealing of the first resin layers to each other, the first resin layers may be thermally fused to each other, and, in the sealing of the metal layers to each other, the metal layers may be welded to each other by laser.

The edge of each of the pair of cases may include an exposed region in which the first resin layer is excluded and the metal layer is exposed to the inside, and, in the forming of the folded portion, the exposed region of the one case may surround the exposed region of the other case.

In the sealing of the metal layers to each other, the laser may be emitted onto one surface, from which the second resin layer is excluded, of both outer surfaces of the folded portion.

### ADVANTAGEOUS EFFECTS

According to the preferred embodiments of the present invention, the metal sealing portion may be formed on the folded portion to maintain the sealing of the pouch type battery cell event at the high temperature and the high pressure and to have the high sealing strength. Accordingly, when the abnormal high-temperature occurs in the electrode assembly, the occurrence of the thermal propagation (TP) to other battery cells may be prevented or sufficiently delayed.

Moreover, the insulating sealing potion may be formed inside the metal sealing portion to maintain the case to be in the state insulated from the electrode assembly and the electrolyte.

The metal sealing portion may be dually sealed so that the sealing strength of the metal sealing portion is further increased.

When compared to a case in which the folded portion is not formed, the ratio of the gap between the metal layers relative to the thickness of the folded portion may decrease so that the quality of the laser welding is improved.

In addition, the effects may be included which are easily predictable by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention. The present invention should not be construed as being limited to only the drawings. In the drawings:
FIG. 1 is a perspective view illustrating a case and an electrode assembly of a pouch type battery cell according to an embodiment of the present invention;
FIG. 2 is a cross-sectional view of a pouch type battery cell according to an embodiment of the present invention;
FIG. 3 is a cross-sectional view of a pouch type battery cell according to another embodiment of the present invention;
FIG. 4 is an enlarged cross-sectional view illustrating a folded portion of a pouch type battery cell according to still another embodiment of the present invention;
FIG. 5 is a cross-sectional view of a pouch type battery cell according to Comparative Example; and
FIG. 6 is a flowchart of a method for manufacturing a pouch type battery cell according to still another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

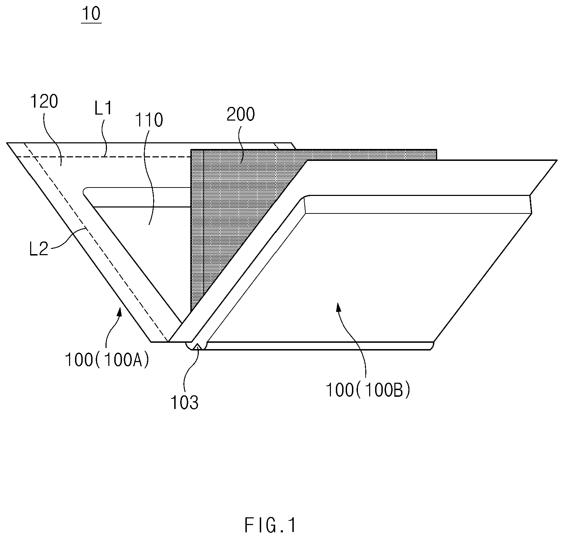

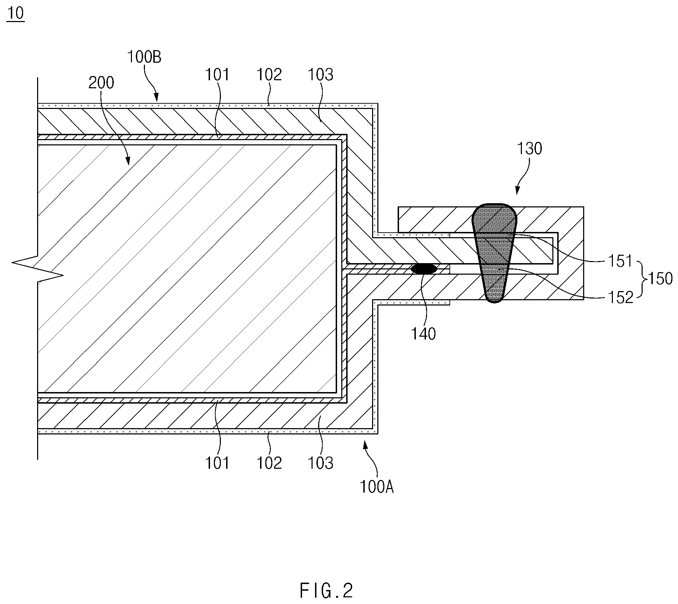

FIG. 1 is a perspective view illustrating a case and an electrode assembly of a pouch type battery cell according to an embodiment of the present invention. FIG. 2 is a cross-sectional view of a pouch type battery cell according to an embodiment of the present invention.

A pouch type battery cell 10 according to an embodiment of the present invention may include a pair of cases 100 and an electrode assembly 200 accommodated between the pair of cases 100. In more detail, the pair of cases 100 may be sealed in a state of accommodating the electrode assembly 200 together with an electrolyte, to constitute the pouch type battery cell 10.

The electrode assembly 200 may include a positive electrode, a negative electrode, and a separator that is interposed between the positive electrode and the negative electrode to insulate the positive electrode and the negative electrode from each other. The type of the electrode assembly 200 is not limited. As one example, the electrode assembly 200 may be a stacked type electrode assembly in which a positive electrode and a negative electrode are stacked alternately with a separator therebetween. As another example, the electrode assembly 200 may be a jellyroll-type electrode assembly in which sheet-shaped positive and negative electrodes are wound together with a separator therebetween.

The pair of cases 100 may provide an accommodation space capable of accommodating the electrode assembly 200, and have a pouch shape as a whole.

The pair of cases 100 may be connected to each other at one side, and the portions connected to each other may constitute a folding part 105. That is, the pair of cases 100 may be connected as one body by the folding part 105. However, an embodiment of the present invention is not limited thereto, and the pair of cases 100 may be provided as separate members separated from each other.

Each of the cases 100 may include a first resin layer 101, a second resin layer 102, and a metal layer 103. That is, the case 100 may be manufactured by molding a laminate film including the first resin layer 101, the second resin layer 102, and the metal layer 103.

The first resin layer 101 may constitute the innermost layer of the case 100.

The first resin layer 101 disposed in a cup portion 110 of each of the pair of cases 100 may be in direct contact with or adjacent to each of the electrode assembly 200 and an electrolyte. Thus, the first resin layer 101 may have high insulating properties and corrosion resistance. For example, the first resin layer 101 may include a polypropylene (PP) material. However, an embodiment of the present invention is not limited thereto, and the material of the first resin layer 101 may be selected as appropriate by those skilled in the art.

The first resin layers 101 disposed on edges 120 of the pair of cases 100, respectively, may be sealed to each other to provide an insulating sealing portion 140. The insulating sealing portion 140 will be described later in detail.

The second resin layer 102 may constitute the outermost layer of the case 100. The second resin layer 102 may electrically insulate the electrode assembly 200 from the outside while protecting the pouch type battery cell 10 from friction and collision with the outside. For example, the second resin layer 102 may include a polyethylene terephthalate (PET) material. However, an embodiment of the present invention is not limited thereto, and the material of the second resin layer 102 may be selected as appropriate by those skilled in the art.

The metal layer 103 may be stacked between the first resin layer 101 and the second resin layer 102. The metal layer 103 may secure the mechanical strength of the case 100, block entrance of external gas, moisture, or the like, and prevent leakage of the electrolyte.

The metal layer 103 may include a stainless steel (STS) material. As the stainless steel has a melting point of about 1400°C, the stainless steel may have high thermal resistance compared to aluminum (Al) used in a pouch type battery cell according to the related art.

The metal layers 103 disposed in edges 120 of the pair of cases 100, respectively, may be sealed to each other to provide a metal sealing portion 150. The metal sealing portion 150 will be described later in detail.

The cup portion 110 that accommodates the electrode assembly 200 may be provided in at least one of the pair of cases 100. The cup portion 110 may be recessed and molded in the laminate film that is a base material of the case 100.

In this embodiment, the cup portion 110 may be provided in each of the pair of cases 100. The pair of cup portions 110 may communicate with each other to provide an accommodation space in which the electrode assembly 200 is accommodated.

Each of the pair of cases 100 may include the edge 120 disposed at a circumference of the cup portion 110. The edge 120 may be termed a terrace part. The edges 120 of the pair of cases 100 may be sealed to each other in a state of being in contact with each other and accordingly, the electrode assembly 200 may be sealed in the pair of cases 100.

In one example, when the pair of cases 100 are provided as one body, the folding part 105 may be folded so that the edges 120 of the pair of cases 100 are in contact with each other. In this case, the edges 120 that are in contact with each other may constitute three sides of the pouch type battery cell 10, and the folding part 105 may constitute one remaining side. Thus, in the pouch type battery cell 10, sealing portions 140 and 150 may be provided at the three sides.

For another example, when the pair of cases 100 are separated from each other, the edges 120 of the pair of cases 100 may be disposed to be in contact with each other. In this case, the edges 120 that are in contact with each other may constitute four sides of the pouch type battery cell 10. In the pouch type battery cell 10, sealing portions 140 and 150 may be provided at the four sides.

The pouch type battery cell 10 includes a folded portion 130 at which the edge 120 of one case 100A of the pair of cases 100 is folded to surround the edge 120 of the other case 100B.

In more detail, the edge 120 of the one case 100A may be processed by hemming along an end of the edge 120 of the other case 100B. To this end, the edge 120 of the one case 100A may be wider than the edge 120 of the other case 100B. In more detail, the edge 120 of the one case 100A may be more elongated in a full-length and full-width directions than the edge 120 of the other case 100B.

A first line L1 and a second line L2 illustrated in FIG. 1 are shown as examples of lines to be folded in the hemming process. The first line L1 may be parallel to the full-length direction of the pouch type battery cell 10, and the second line L2 may be parallel to the full-width direction of the pouch type battery cell 10. Each of the first line L1 and the second line L2 may correspond to an end of the edge 120 of the other case 100B.

The first line L1 and the second line L2 may be folded in sequence or in the inverse order. A corner portion at which the first line L1 and the second line L2 overlap each other at the edge 120 of the one case 100A may be double folded. However, an embodiment of the present invention is not limited thereto, and the corner portion may be cut out to have an appropriate shape by those skilled in the art.

The pouch type battery cell 10 includes the insulating sealing portion 140 and the metal sealing portion 150.

The insulating sealing portion 140 is formed by sealing the first resin layers 101 of the pair of cases 100 to each other. In more detail, the first resin layers 101 of the edges 120 of the pair of cases 100 may be thermally fused to each other to provide the insulating sealing portion 140.

The insulating sealing portion 140 may be provided inward from the folded portion 130 or overlap a portion of the inside of the folded portion 130.

The insulating sealing portion 140 may be provided to be elongated along the edge 120 of each of the pair of cases 100. The insulating sealing portion 140 may be connected to the first resin layer 101 in the cup portion 110. Thus, the electrode assembly 200 and the electrolyte in the cup portion 110 may be sealed to be in an insulated state by the insulating sealing portion 140.

The metal sealing portion 150 may be formed by sealing the metal layers 103 of the pair of cases 100 to each other. In more detail, the metal layers 103 of the edges 120 of the pair of cases 100 may be welded to each other to provide the metal sealing portion 150.

The metal sealing portion 150 may be provided to be elongated along the folded portion 130. The metal sealing portion 150 may be disposed outside the insulating sealing portion 140.

As the metal layers 103 are welded to each other, the metal sealing portion 150 may have higher sealing strength than the insulating sealing portion 140 on which the first resin layers 101 are fused to each other. Accordingly, the sealing strength of the pouch type battery cell 10 may be remarkably increased.

The metal sealing portion 150 is provided at the folded portion 130. The metal sealing portion 150 may be formed by welding the metal layers 103 of the folded portion 130 to each other by laser in a state in which the folded portion 130 is formed. Thus, the metal sealing portion 150 may be dually sealed.

A laser beam for forming the metal sealing portion 150 may be emitted at one side of the folded portion 130, and the emitting direction is not limited. For example, the laser beam may be emitted from above or below the folded portion 130.

In more detail, the metal sealing portion 150 may include a first metal sealing portion 151, at which one surface (e.g., a top surface) of the metal layer 103 of the other case 100B is sealed to the metal layer 103 of the one case 100A, and a second metal sealing portion 152 at which the other surface (e.g., a bottom surface) of the metal layer 103 of the other case 100B is sealed to the metal layer 103 of the one case 100A.

As the metal sealing portion 150 is dually formed at the folded portion 130 as above, the sealing strength of the pouch type battery cell 10 may be further increased. In addition, when compared to a case in which the folded portion 130 is not formed, there is an advantage that a ratio of a gap between the metal layers 103 relative to the thickness of the folded portion 130 may decrease so that quality of the laser welding is improved.

The first resin layer 101 and the second resin layer 102 may be excluded from the metal sealing portion 150.

In more detail, each of the edges 120 of the pair of cases 100, which constitute the folded portion 130, may include an exposed region, in which the first resin layer 101 and the second resin layer 102 are excluded and the metal layer 103 is exposed to each of the inside and the outside. The folded portion 130 may be provided so that the exposed region of the one case 100A is folded to surround the exposed region of the other case 100B. That is, the folded portion 130 may be provided so that the metal layer 103 of the one case 100A is folded to surround the metal layer 103 of the other case 100B.

Accordingly, the first resin layer 101 and the second resin layer 102 may prevent the sealing quality and strength of the metal sealing portion 150 from decreasing.

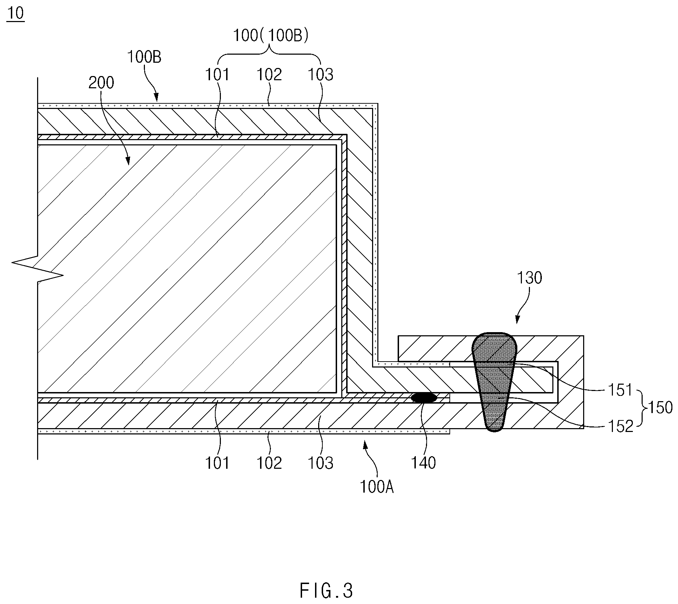

FIG. 3 is a cross-sectional view of a pouch type battery cell according to another embodiment of the present invention.

Hereinafter, the content duplicated with the embodiment described above will be omitted and the description will be focused on differences.

In a pouch type battery cell 10 according to another embodiment of the present invention, a cup portion 110 may not be provided in one of a pair of cases 100. For example, a cup portion may not be provided in one case 100A, and the cup portion 110 may be provided in the other case 100B. In this case, an edge 120 of the one case 100A may be disposed on a circumference of a portion facing the cup portion 110 of the other case 100B.

As describe above, the edge 120 of the one case 100A may be folded to surround the edge 120 of the other case 100B to form a folded portion 130. However, an embodiment of the present invention is not limited thereto, and the edge 120 of the other case 100B may be also folded to surround the edge 120 of the one case 100A to form the folded portion 130.

In addition, first resin layers 101 of the edges 120 of the pair of cases 100 may be thermally fused to each other to provide an insulating sealing portion 140, and metal layers 103 of the folded portion 130 may be welded to each other to provide a metal sealing portion 150. The content described above applies to sealing portions 140 and 150.

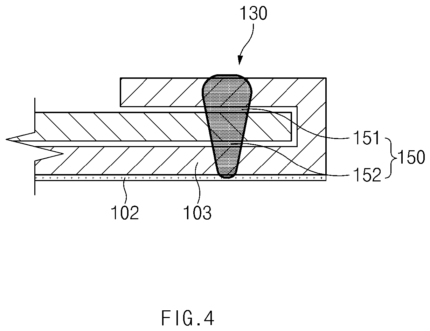

FIG. 4 is an enlarged cross-sectional view illustrating a folded portion of a pouch type battery cell according to still another embodiment of the present invention.

Hereinafter, the content duplicated with the embodiment described above will be omitted and the description will be focused on differences.

In a pouch type battery cell 10 according to still another embodiment of the present invention, a second resin layer 102 may be excluded from any one of both outer surfaces a folded portion 130. Preferably, the second resin layer 102 may be excluded from one surface (a top surface in FIG. 4), which includes an end of one case 100A, of both the outer surfaces of the folded portion 130, and the second resin layer 102 may be included in the opposite surface (a bottom surface in FIG. 4). That is, there is a difference in that, in the embodiment described above, the second resin layer 102 is excluded from each of both the outer surfaces of the folded portion 130, whereas in this embodiment, the second resin layer 102 is included in any one of both the outer surfaces of the folded portion 130.

A laser beam for forming a metal sealing portion 150 may be emitted onto one surface, from which the second resin layer 102 is excluded, of both the outer surfaces of the folded portion 130. Accordingly, metal layers 103 of the folded portion 130 may be welded to each other so that damage to the second resin layer 102 is minimized during the forming of the metal sealing portion 150.

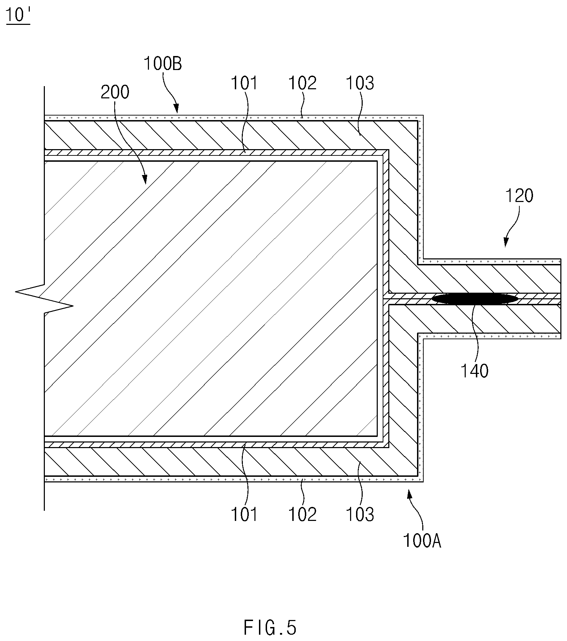

FIG. 5 is a cross-sectional view of a pouch type battery cell according to Comparative Example.

A pouch type battery cell 10' according to Comparative Example may include an insulating sealing portion 140, on which first resin layers 101 of edges 120 of a pair of cases 100 are thermally fused to each other, and may not include a metal sealing portion 150 on which metal layers 103 are welded to each other.

As the insulating sealing portion 140 is formed by thermally fusing the first resin layers 101 to each other, the insulating sealing portion 140 may be weak against high-temperature. For example, when the first resin layers 101 include a polypropylene (PP) material, the insulating sealing portion 140 may be melted at a temperature of about 150°C. Thus, when a temperature exceeds a critical temperature due to abnormal heat generation of an electrode assembly 200, or the like, the temperature rapidly increases to about 1000°C or higher. Accordingly, there is a concern that sealing of the pouch type battery cell 10' may be destroyed.

On the other hand, in the pouch type battery cell 10 according to the present invention, the folded portion 130 may include the metal sealing portion 150 that is dually sealed, so that the sealing of the pouch type battery cell 10 is maintained even when the insulating sealing portion 140 is melted. Moreover, the metal sealing portion 150 may have higher sealing strength than the insulating sealing portion 140.

In particular, when the metal layer 103 constituting the metal sealing portion 150 includes a stainless steel (STS) material, the metal sealing portion 150 may not be melted to a temperature of about 1400°C and may maintain the sealing. Accordingly, an occurrence of thermal propagation (TP) to other battery cells around the pouch type battery cell 10 may be prevented or sufficiently delayed.

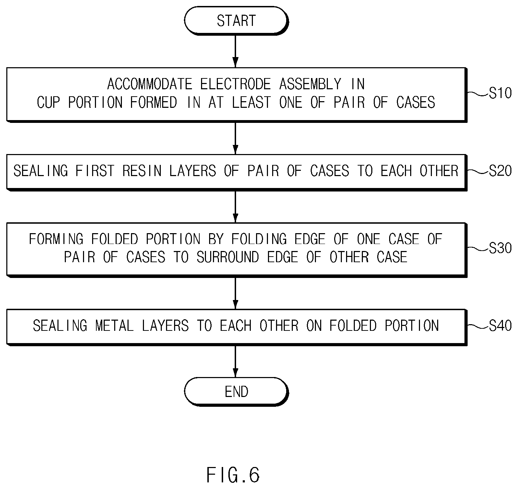

FIG. 6 is a flowchart of a method for manufacturing a pouch type battery cell according to still another embodiment of the present invention.

The method for manufacturing a pouch type battery cell according to still another embodiment of the present invention may be a method for manufacturing the pouch type battery cell 10 described above.

The method for manufacturing the pouch type battery cell includes accommodating an electrode assembly 200 in a cup portion 110 formed in at least one of a pair of cases 100 (S10) (hereinafter referred to as an "accommodating process"), sealing first resin layers 101 of the pair of cases 100 to each other (S20) (hereinafter referred to as an "insulation sealing process"), forming a folded portion 130 by folding an edge 120 of one case 100A of the pair of cases 100 so that the edge 120 surrounds an edge 120 of the other case 100B(S30) (hereinafter referred to as a "processing process"), and sealing metal layers 103 to each other at the folded portion 130 (S40) (hereinafter referred to as a "metal sealing process").

In the accommodating process (S10), the edges 120 of the pair of cases 100 may be in contact with each other in a state in which the electrode assembly 200 is accommodated in the cup portion 110. Accordingly, the electrode assembly 200 may be accommodated between the pair of cases 100.

In the insulation sealing process (S20), the first resin layers 101 of the edges 120 of the pair of cases 100 may be thermally fused to each other to form an insulating sealing portion 140.

In the processing process (S30), an exposed region of the one case 100A may be folded to surround an exposed region of the other case 100B. The exposed region may mean a region in which the first resin layer 101 is excluded from the edge 120 of each of the cases 100 and the metal layer 103 is exposed to the inside. Also, a second resin layer 102 may be excluded and the metal layer 103 may be exposed to the outside in at least a portion of the exposed region.

In addition, when a corner portion of the edge 120 of the one case 100A is double folded, the processing process (S30) may include a process of pressing the double-folded corner portion. Accordingly, the corner portion may be prevented from unnecessarily increasing in thickness.

In the metal sealing process (S40), the metal layers 103 of the folded portion 130 are welded to each other by laser to form a metal sealing portion 150. In more detail, the laser may be emitted onto one surface, from which the second resin layer 102 is excluded, of both outer surfaces of the folded portion 130.

The metal sealing portion 150 may include a first metal sealing portion 151, on which one surface (e.g., a top surface) of the metal layer 103 of the other case 100B is sealed to the metal layer 103 of the one case 100A, and a second metal sealing portion 152 on which the other surface (e.g., a bottom surface) of the metal layer 103 of the other case 100B is sealed to the metal layer 103 of the one case 100A.

The processing process (S30) and the metal sealing process (S40) may be performed in sequence. However, the order in which the insulation sealing process (S20) is performed may be changed as necessary.

In one example, as illustrated in FIG. 6, the insulation sealing process (S20), the processing process (S30), and the metal sealing process (S40) may be performed in sequence.

In another example, the insulation sealing process (S20) may be performed after the processing process (S30) and the metal sealing process (S40).

In still another example, the insulation sealing process (S20) may be performed between the processing process (S30) and the metal sealing process (S40).

The description of the present invention is intended to be illustrative, and various changes and modifications can be made by those of ordinary skill in the art to which the present invention pertains, without departing from the scope of the present invention as defined by the appended claims.

### [Description of the Symbols]

| | | | |
|---|---|---|---|
| 10: | pouch type battery cell | 100: | case |
| 101: | first resin layer | 102: | second resin layer |
| 103: | metal layer | 110: | cup portion |
| 120: | edge | 130: | folded portion |
| 140: | insulating sealing portion | 150: | metal sealing portion |
| 151: | first metal sealing portion | 152: | second metal sealing portion |
| 200: | electrode assembly | | |

## Claims

1. A pouch type battery cell (10), in which an electrode assembly (200) is accommodated between a pair of cases (100), each of which comprises a first resin layer (101) constituting the innermost layer, a second resin layer (102) constituting the outermost layer, and a metal layer (103) stacked between the first resin layer (101) and the second resin layer (102), the pouch type battery cell (10) comprising:
a cup portion (110) provided in at least one of the pair of cases (100) and configured to accommodate the electrode assembly (200);
an insulating sealing portion (140) at which the first resin layers (101) of the pair of cases (100) are sealed to each other;
the pouch type battery cell (10) being **characterised by** further comprising:
a folded portion (130) folded so that an edge (120) of one case of the pair of cases (100) surrounds an edge (120) of the other case; and
a metal sealing portion (150) which is provided at the folded portion (130) and at which the metal layers (103) of the pair of cases (100) are sealed to each other.

2. The pouch type battery cell (10) of claim 1, wherein the metal sealing portion (150) is disposed outside the insulating sealing portion (140).

3. The pouch type battery cell (10) of claim 1, wherein the metal sealing portion (150) comprises:
a first metal sealing portion (151) at which one surface of the metal layer (103) of the other case is sealed to the metal layer (103) of the one case; and
a second metal sealing portion (152) at which the other surface of the metal layer (103) of the other case is sealed to the metal layer (103) of the one case.

4. The pouch type battery cell (10) of claim 1, wherein the first resin layer (101) and the second resin layer (102) are excluded from the metal sealing portion (150).

5. The pouch type battery cell (10) of claim 1, wherein the first resin layer (101) is excluded from the metal sealing portion (150), and
the second resin layer (102) is excluded from any one of both outer surfaces of the folded portion (130).

6. The pouch type battery cell (10) of claim 1, wherein the metal layer (103) comprises a stainless-steel material.

7. A method for manufacturing a pouch type battery cell (10), in which an electrode assembly (200) is accommodated between a pair of cases (100), each of which comprises the innermost first resin layer (101), the outermost second resin layer (102), and a metal layer (103) stacked between the first resin layer (101) and the second resin layer (102), the method comprising:
accommodating the electrode assembly (200) in a cup portion (110) formed in at least one of the pair of cases (100);
sealing the first resin layers (101) of the pair of cases (100) to each other;
the method being **characterised by** comprising:
forming a folded portion (130) by folding an edge (120) of one case of the pair of cases (100) so that the edge (120) surrounds an edge (120) of the other case; and
sealing the metal layers (103) to each other at the folded portion (130).

8. The method of claim 7, wherein, in the sealing of the first resin layers (101) to each other, the first resin layers (101) are thermally fused to each other, and
in the sealing of the metal layers (103) to each other, the metal layers (103) are welded to each other by laser.

9. The method of claim 7, wherein the edge (120) of each of the pair of cases (100) comprises an exposed region in which the first resin layer (101) is excluded and the metal layer (103) is exposed to the inside,
wherein, in the forming of the folded portion (130), the exposed region of the one case surrounds the exposed region of the other case.

10. The method of claim 7, wherein, in the sealing of the metal layers (103) to each other, the laser is emitted onto one surface, from which the second resin layer (102) is excluded, of both outer surfaces of the folded portion (130).

## Patentansprüche

1. Beutelartige Batteriezelle (10), bei der eine Elektrodenbaugruppe (200) zwischen einem Paar von Gehäusen (100) untergebracht ist, von denen jedes eine erste Harzschicht (101), die die innerste Schicht bildet, eine zweite Harzschicht (102), die die äußerste Schicht bildet, und eine Metallschicht (103) umfasst, die zwischen der ersten Harzschicht (101) und der zweiten Harzschicht (102) geschichtet ist, wobei die beutelartige Batteriezelle (10) umfasst:
einen Becherabschnitt (110), der in mindestens einem des Paares von Gehäusen (100) bereitgestellt und so konfiguriert ist, dass er die Elektrodenbaugruppe (200) aufnimmt;
einen isolierenden Versiegelungsabschnitt (140), an dem die ersten Harzschichten (101) des Paares von Gehäusen (100) miteinander versiegelt sind;
wobei die beutelartige Batteriezelle (10) **dadurch gekennzeichnet ist, dass** sie ferner umfasst:
einen gefalteten Abschnitt (130), der so gefaltet ist, dass ein Rand (120) eines Gehäuses des Paares von Gehäusen (100) einen Rand (120) des anderen Gehäuses umgibt; und
einen Metall-Versiegelungsabschnitt (150), der an dem gefalteten Abschnitt (130) bereitgestellt ist und an dem die Metallschichten (103) des Paares von Gehäusen (100) miteinander versiegelt sind.

2. Beutelartige Batteriezelle (10) nach Anspruch 1, wobei der Metall-Versiegelungsabschnitt (150) außerhalb des isolierenden Versiegelungsabschnitts (140) angeordnet ist.

3. Beutelartige Batteriezelle (10) nach Anspruch 1, wobei der Metall-Versiegelungsabschnitt (150) umfasst:
einen ersten Metall-Versiegelungsabschnitt (151), an dem eine Oberfläche der Metallschicht (103) des anderen Gehäuses mit der Metallschicht (103) des einen Gehäuses versiegelt ist; und
einen zweiten Metall-Versiegelungsabschnitt (152), an dem die andere Oberfläche der Metallschicht (103) des anderen Gehäuses mit der Metallschicht (103) des einen Gehäuses versiegelt ist.

4. Beutelartige Batteriezelle (10) nach Anspruch 1, wobei die erste Harzschicht (101) und die zweite Harzschicht (102) aus dem Metall-Versiegelungsabschnitt (150) ausgeschlossen sind.

5. Beutelartige Batteriezelle (10) nach Anspruch 1, wobei die erste Harzschicht (101) aus dem Metall-Versiegelungsabschnitt (150) ausgeschlossen ist, und
die zweite Harzschicht (102) aus einer beliebigen der beiden Außenflächen des gefalteten Abschnitts (130) ausgeschlossen ist.

6. Beutelartige Batteriezelle (10) nach Anspruch 1, wobei die Metallschicht (103) ein Edelstahlmaterial umfasst.

7. Verfahren zur Herstellung einer beutelartigen Batteriezelle (10), bei der eine Elektrodenbaugruppe (200) zwischen einem Paar von Gehäusen (100) untergebracht ist, von denen jedes die innerste erste Harzschicht (101), die äußerste zweite Harzschicht (102) und eine Metallschicht (103) umfasst, die zwischen der ersten Harzschicht (101) und der zweiten Harzschicht (102) geschichtet ist, wobei das Verfahren umfasst:
Unterbringen der Elektrodenbaugruppe (200) in einem Becherabschnitt (110), der in mindestens einem des Paares von Gehäusen (100) ausgebildet ist;
Versiegeln der ersten Harzschichten (101) des Paares von Gehäusen (100) miteinander;
wobei das Verfahren **dadurch gekennzeichnet ist, dass** es umfasst:
Bilden eines gefalteten Abschnitts (130) durch Falten eines Rands (120) eines Gehäuses des Paares von Gehäusen (100) derart, dass der Rand (120) einen Rand (120) des anderen Gehäuses umgibt; und
Versiegeln der Metallschichten (103) miteinander an dem gefalteten Abschnitt (130).

8. Verfahren nach Anspruch 7, wobei beim Versiegeln der ersten Harzschichten (101) miteinander die ersten Harzschichten (101) thermisch miteinander verschmolzen werden, und
beim Versiegeln der Metallschichten (103) miteinander die Metallschichten (103) durch Laser miteinander verschweißt werden.

9. Verfahren nach Anspruch 7, wobei der Rand (120) jedes des Paares von Gehäusen (100) einen freigelegten Bereich umfasst, aus dem die erste Harzschicht (101) ausgeschlossen ist und die Metallschicht (103) nach innen freigelegt ist,
wobei beim Bilden des gefalteten Abschnitts (130) der freigelegte Bereich des einen Gehäuses den freigelegten Bereich des anderen Gehäuses umgibt.

10. Verfahren nach Anspruch 7, wobei beim Versiegeln der Metallschichten (103) miteinander der Laser auf eine Oberfläche, aus der die zweite Harzschicht (102) ausgeschlossen ist, von beiden Außenflächen des gefalteten Abschnitts (130) emittiert wird.

## Revendications

1. Cellule de batterie de type poche (10), dans lequel un ensemble d'électrodes (200) est logé entre une paire de boîtiers (100), dont chacun comprend une première couche de résine (101) constituant la couche la plus interne, une seconde couche de résine (102) constituant la couche la plus externe, et une couche métallique (103) empilée entre la première couche de résine (101) et la seconde couche de résine (102), la cellule de batterie de type poche (10) comprenant :
une partie coupelle (110) prévue dans au moins l'un de la paire de boîtiers (100) et configurée pour loger l'ensemble d'électrodes (200) ;
une partie d'étanchéité isolante (140) au niveau de laquelle les premières couches de résine (101) de la paire de boîtiers (100) sont scellées entre elles ;
la cellule de batterie de type poche (10) étant **caractérisé en ce qu'**il comprend en outre :
une partie pliée (130) pliée de sorte qu'un bord (120) d'un boîtier de la paire de boîtiers (100) entoure un bord (120) de l'autre boîtier ; et
une partie d'étanchéité métallique (150) qui est prévue au niveau de la partie pliée (130) et au niveau de laquelle les couches métalliques (103) de la paire de boîtiers (100) sont scellées entre elles.

2. Cellule de batterie de type poche (10) selon la revendication 1, dans lequel la partie d'étanchéité métallique (150) est disposée à l'extérieur de la partie d'étanchéité isolante (140).

3. Cellule de batterie de type poche (10) selon la revendication 1, dans lequel la partie d'étanchéité métallique (150) comprend :
une première partie d'étanchéité métallique (151) au niveau de laquelle une surface de la couche métallique (103) de l'autre boîtier est scellée à la couche métallique (103) du premier boîtier ; et
une seconde partie d'étanchéité métallique (152) au niveau de laquelle l'autre surface de la couche métallique (103) de l'autre boîtier est scellée à la couche métallique (103) du premier boîtier.

4. Cellule de batterie de type poche (10) selon la revendication 1, dans lequel la première couche de résine (101) et la seconde couche de résine (102) sont exclues de la partie d'étanchéité métallique (150).

5. Cellule de batterie de type poche (10) selon la revendication 1, dans lequel la première couche de résine (101) est exclue de la partie d'étanchéité métallique (150), et la seconde couche de résine (102) est exclue de l'une quelconque des deux surfaces externes de la partie pliée (130).

6. Cellule de batterie de type poche (10) selon la revendication 1, dans lequel la couche métallique (103) comprend un matériau en acier inoxydable.

7. Procédé de fabrication d'une cellule de batterie de type poche (10), dans lequel un ensemble d'électrodes (200) est logé entre une paire de boîtiers (100), dont chacun comprend la première couche de résine (101) la plus interne, la seconde couche de résine (102) la plus externe, et une couche métallique (103) empilée entre la première couche de résine (101) et la seconde couche de résine (102), le procédé comprenant :
le logement de l'ensemble d'électrodes (200) dans une partie coupelle (110) formée dans au moins l'un de la paire de boîtiers (100) ;
le scellage des premières couches de résine (101) de la paire de boîtiers (100) entre elles ;
le procédé étant **caractérisé en ce qu'**il comprend :
la formation d'une partie pliée (130) par pliage d'un bord (120) d'un boîtier de la paire de boîtiers (100) de sorte que le bord (120) entoure un bord (120) de l'autre boîtier ; et
le scellage des couches métalliques (103) entre elles au niveau de la partie pliée (130).

8. Procédé selon la revendication 7, dans lequel, lors du scellage des premières couches de résine (101) entre elles, les premières couches de résine (101) sont fusionnées thermiquement entre elles, et
lors du scellage des couches métalliques (103) entre elles, les couches métalliques (103) sont soudées entre elles par laser.

9. Procédé selon la revendication 7, dans lequel le bord (120) de chacun de la paire de boîtiers (100) comprend une région exposée dans laquelle la première couche de résine (101) est exclue et la couche métallique (103) est exposée vers l'intérieur,
dans lequel, lors de la formation de la partie pliée (130), la région exposée du premier boîtier entoure la région exposée de l'autre boîtier.

10. Procédé selon la revendication 7, dans lequel, lors du scellage des couches métalliques (103) entre elles, le laser est émis sur une surface, de laquelle la seconde couche de résine (102) est exclue, parmi les deux surfaces externes de la partie pliée (130).
